(19) Europäisches Patentamt
European Patent Office
Office européen des brevets

(11) Veröffentlichungsnummer : **0 065 237**
**B1**

(12) # EUROPÄISCHE PATENTSCHRIFT

(45) Veröffentlichungstag der Patentschrift : **26.09.84**

(51) Int. Cl.³ : **C 09 D 3/80**, C 09 D 3/81, C 08 L 25/14, C 08 L 33/06

(21) Anmeldenummer : **82103964.1**

(22) Anmeldetag : **07.05.82**

(54) **Wässrige, verseifungsstabil lagerfähige Lackbindemittel.**

(30) Priorität : **19.05.81 DE 3119928**

(43) Veröffentlichungstag der Anmeldung : **24.11.82 Patentblatt 82/47**

(45) Bekanntmachung des Hinweises auf die Patenterteilung : **26.09.84 Patentblatt 84/39**

(84) Benannte Vertragsstaaten : **AT DE FR GB IT NL**

(56) Entgegenhaltungen : **EP-A- 0 011 760**

(73) Patentinhaber : **BAYER AG**
**Konzernverwaltung RP Patentabteilung**
**D-5090 Leverkusen 1 Bayerwerk (DE)**

(72) Erfinder : **Höhlein, Peter, Dr.**
**Windmühlenweg 3e**
**D-4152 Kempen 3 (DE)**
Erfinder : **Schoeps, Jochen, Dr.**
**Windmühlenstrasse 126**
**D-4150 Krefeld (DE)**

**EP 0 065 237 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Carboxylgruppen enthaltende Lackbindemittel auf Basis eines Gemisches aus einem carboxylgruppenhaltigen Mischpolymeren und einem Aminoplastharz, die nach der Neutralisation der Carboxylgruppen mit Wasser verdünnbar und für die Herstellung verseifungsstabil lagerfähiger Einbrennlacke geeignet sind.

Lösungspolymerisate von Acrylmonomeren werden aufgrund ihrer Eigenschaften, wie Gilbungsfestigkeit, Außenbeständigkeit und Glanzhaltung für die Formulierung von Decklacken oder Einschichtlacken, an die vom Verbraucher besondere Ansprüche in dieser Beziehung gestellt werden, herangezogen.

Gegenwärtig sind diese Bindemittel meist in organischen Lösungsmitteln gelöst, wodurch bei der Verarbeitung der daraus hergestellten Lacke Probleme bezüglich der Reinigung der Abluft entstehen.

Auch die heute bekannten und eingesetzten wasserlöslichen Bindemittel und Lacke auf der Basis von Lösungspolymerisaten von Acrylmonomeren enthalten noch relativ große Mengen von umweltbelastenden Lösungsmitteln. Die Notwendigkeit der Mitverwendung dieser Lösungsmittel ist durch das Viskositätsverhalten dieser Bindemittel beim Verdünnen mit Wasser gegeben.

Aus der EU-A-0 011 760 sind wasserverdünnbare Lackbindemittel bekannt, die sich von Lackbindemitteln vorliegender Anmeldung im wesentlichen dadurch unterscheiden, daß in dem Copolymerisat des Lackbindemittels des Standes der Technik die Komponente f. vorliegender Anmeldung, d. h., copolymerisierte Einheiten eines Umsetzungsproduktes aus Allylglycidylether und aliphatischen, cycloaliphatischen, araliphatischen oder aromatischen Monocarbonsäuren mit 2-30 C-Atomen oder Mischungen fehlt, und ε-Caprolactam als Reaktivverdünner zwingen vorhanden sein muß. Die mit den Bindemitteln gemäß Anspruch 1 des vorgenannten Standes der Technik hergestellten pigmentierten Überzugsmittel (Weißlacke) ergeben nach ihrer Härtung Überzuge mit guten anwendungstechnischen Daten und guter Lösungsmittel-, Chemikalien- und Witterungsbeständigkeit und direkt nach ihrer Herstellung auch mit guter Waschlaugenbeständigkeit. Nach drei Wochen Lagerung des Weißlackes bei Raumtemperatur hergestellte Überzüge (durch Einbrennen 10 Minuten bei 180 °C) bestehen jedoch den Waschlaugenbeständigkeitstest nicht mehr. Demgegenüber sind die Bindemittel und Weißlacke vorliegender Anmeldung lagerstabil. Auch nach drei Wochen Lagerung der Weißlacke bei Raumtemperatur bestehen aus diesen hergestellte Überzüge überraschenderweise den Waschlaugentest. Diese Verbesserung ist für die mit erfindungsgemäßen Bindemitteln hergestellten Weißlacke auch dann gegeben, wenn der Weißlack kein ε-Caprolactam als Reaktivverdünner enthält. Weißlacke der EU-A-0 011 760 ohne ε-Caprolactam als Reaktivverdünner ergeben selbst direkt nach ihrer Herstellung Überzüge mit ungenügender Waschlaugenbeständigkeit, wie vorgenannter Schrift zu entnehmen ist.

Aufgabe der vorliegenden Erfindung war somit das Bereitstellen festkörperreicher Lackbindemittel, die für die Herstellung wasserverdünnbarer, festkörperreicher Überzugsmittel mit verseifungsstabiler Lagerfähigkeit geeignet sind, die ihrerseits nach dem Einbrennen waschlaugenfeste, glänzende Filme mit guten lacktechnischen Daten ergeben.

Die Aufgabe wurde dadurch gelöst, daß Mischungen aus Aminoplastharzen und einem Copolymerisat aus speziellen Monomeren als Bindemittel verwendet wurden.

Gegenstand der Erfindung sind daher wasserverdünnbare Lackbindemittel aus einer Mischung aus

A. 50-94 Gew.-%, vorzugsweise 55-80 Gew.-%, eines Copolymerisats, bestehend aus copolymerisierten Einheiten von

a. 30-65 Gew.-%, eines Vinyl- oder Isopropenylaromaten mit 8-14 C-Atomen oder eines Methacrylsäurealkylesters mit 1-4 C-Atomen in der Alkoholkomponente oder deren Mischungen ;

b. 10-30 Gew.-% mindestens eines Acrylsäurealkylesters mit 1-8 C-Atomen in der Alkoholkomponente ;

c. 1-20 Gew.-% Maleinsäure, Fumarsäure, Itaconsäure oder deren Halbester mit 1-8 C-Atomen in der Alkoholkomponente, (Meth)Acrylsäure oder Mischungen der genannten Monomeren ;

d. 0-20 Gew.-% mindestens eines Hydroxyalkylesters der (Meth)Acrylsäure mit 2-4 C-Atomen in der Alkylgruppe oder Glycidyl (meth)acrylat oder Mischungen der vorgenannten Monomeren ;

e. 10-30 Gew.-% N-Methylol (meth)acrylsäureamid oder N-Methoxymethyl (meth)acrylsäureamid, vorzugsweise N-Methoxymethyl (meth)acrylsäureamid und

f. 2-40 Gew.-% eines Umsetzungsproduktes aus Allylglycidylether und aliphatischen, cycloaliphatischen, araliphatischen oder aromatischen Monocarbonsäuren mit 2-30 C-Atomen oder deren Mischungen, vorzugsweise gesättigten, aliphatischen verzweigten Monocarbonsäuren mit 5-20 C-Atomen, insbesondere d-Ethylhexansäure oder Isononansäure sowie

B. 6-50 Gew.-%, vorzugsweise 20-45 Gew.-%, eines Aminoplastharzes und

C. 0-30 Gew.-%, bezogen auf Copolymerisat, eines Lactams,

wobei 30-100 % der Anzahl der Carboxylgruppen der in das Copolymerisat eingebauten Komponente A.c durch Ammoniak, Mono- oder Polyamine neutralisiert sind.

Namentlich bzw. formelmäßig seien beispielhaft die folgenden Komponenten der Gruppen A-C genannt :

Gruppe A. a: Styrol, d-Methylstyrol, o- bzw. p-Chlorstyrol, o-, m- oder p-Methylstyrol, p- tert.-Butylstyrol und gegebenenfalls Mischungen derselben; bevorzugt ist Styrol;

Gruppe A. b: Ethylacrylat, Methylacrylat, n- bzw. iso-Propylacrylat, n-Butylacrylat, 2-Ethylhexylacrylat, Isooctylacrylat, tert.-Butylacrylat oder deren Mischungen; bevorzugt sind Acrylsäurealkylester mit 1-4 Kohlenstoffatomen in der Alkoholkomponente;

Gruppe A. c: Methyl-, Ethyl-, n- und iso-Propyl-, Butyl-, tert.-Butyl-, 2-Ethylhexyl-, Cyclohexylhalbester der Maleinsäure, Fumarsäure oder Itaconsäure, vorzugsweise der Maleinsäure; Acrylsäure, Methacrylsäure oder Mischungen der vorgenannten sauren Monomeren; bevorzugt sind Acrylsäure, Methacrylsäure und/oder Maleinsäurehalbester mit 4-8 C-Atomen in der Alkoholkomponente;

Gruppe A. d: 2-Hydroxyethyl (meth)-acrylat, 2-Hydroxy-propyl(meth)acrylat, 4-Hydroxybutyl-(meth)-acrylat, Trimethylolpropanmono-(meth)acrylat, Pentaerythritmono(meth)-acrylat, Glycidyl(meth)acrylat oder deren Mischungen; vorzugsweise 2-Hydroxypropyl-(meth)acrylat;

Gruppe A. e: N-Methylolacrylsäureamid, N-Methylol-methacrylsäureamid, N-Methoxymethyl-(meth)-acrylamid, vorzugsweise N-Methoxy-methylacrylamid;

Gruppe A. f: Umsetzungsprodukte aus Allylglycidylether + Essigsäure, α-Ethylhexansäure, Isononansäure, Cyclohexanmonocarbonsäure, Benzoesäure, Stearinsäure, Propionsäure, Buttersäure, Valeriansäure usw., insbesondere α-Ethylhexansäure und Isononansäure;

Gruppe B.: Als Beispiel für geeignete Aminoplastharze seien Aldehydkondensationsprodukte von Melamin, Harnstoff und Benzoguanamin genannt. Im allgemeinen wird als Aldehyd Formaldehyd verwendet, obwohl brauchbare Produkte auch mit anderen Aldehyden wie Acetaldehyd, Crotonaldehyd, Acrolein, Benzaldehyd und Furfurylaldehyd erhalten werden. Die Methylolgruppen der Aminoplaste können mit gesättigten aliphatischen Monoalkoholen mit 1-4 C-Atomen verethert sein. Melamin- und Harnstoffharze sind bevorzugt;

Besonders bevorzugt sind Melamin-Formaldehyd-Kondensationsprodukte, die nicht verethert oder mit gesättigten Monoalkoholen mit 1-4 C-Atomen verethert sind (vgl. französische Patentschrift 943 411 oder D. H. Solomon, The Chemistry of Organic Filmformers, 235-240, John Wiley & Sons, Inc., New York 1967).

Gruppe C: Lactame der Formel

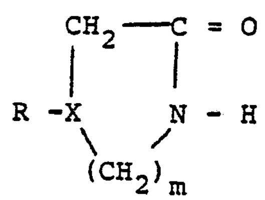

worin

X für eine CH-Gruppe steht, wobei dann
R Wasserstoff und
m eine ganze Zahl von Null bis 9 bedeutet, oder
X für ein Stickstoffatom steht, wobei dann
R einen gesättigten aliphatischen Rest, vorzugsweise Methyl, einen araliphatischen Rest mit 7-12 Kohlenstoffatomen oder einen Pyridinrest oder einen durch niedere Alkylreste ($C_1$-$C_4$) substituierten Pyridinrest und
m die Zahl 3 bedeuten.

Bevorzugte Lactame sind 1-N-Methyl-hexahydro-1,4-diazepion-3, ω-Dodecyllactam, γ-Butyrolactam, δ-Valerolactam, insbesondere ε-Caprolactam.

Die Herstellung des Copolymerisatharzes (Komponente A) kann durch Copolymerisation der Bestandteile a-f nach üblichen Verfahren erfolgen, wobei der radikalischen Polymerisation in der Schmelze bzw. in Lösung der Vorzug gegeben wird. Die Polymerisation kann bei Temperaturen von 70 °C-160 °C, vorzugsweise 100 °C-150 °C, durchgeführt werden.

Die Monomeren a-f werden im wesentlichen in den gleichen Verhältnissen, wie sie zur Polymerisation eingesetzt sind, in das Copolymerisatharz eingebaut, wobei die einpolymerisierten Einheiten im wesentlichen statistisch verteilt sind.

Bevorzugte Initiatoren zur Durchführung der radikalischen Polymerisation sind z. B. symmetrische aliphatische Azoverbindungen wie Azo-bis-isobuttersäurenitril, Azo-bis-2-methyl-valeronitril, 1,1'-Azo-bis-1-cyclohexannitril und 2'2-Azo-bis-isobuttersäurealkylester; symmetrische Diacylperoxide, wie z. B. Acetyl-, Propionyl- oder Butyryl-peroxid, Brom-, Nitro-, Methyl- oder Methoxygruppen substituierte Benzoylperoxide sowie Lauroylperoxid; symmetrische Peroxydicarbonate, wie z. B. Diethyl-, Diisopropyl-, Dicyclohexyl- sowie Dibenzylperoxidicarbonat; tert.-Butylperoctoat oder tert.-Butylphenylperacetat sowie Peroxicarbonate wie tert.-Butyl-N-(phenylperoxi)-carbamat oder tert.-Butyl-N(2,3-dichlor- oder -4-chlorphenyl-peroxi)carbamat. Weitere bevorzugte Peroxide sind: tert.-Butylhydroperoxid, Di-tert.-butylperoxid, Cumolhydroperoxid, Di-Cumolperoxid und tert.-Butylperpivalat.

Die Initiatoren können in Mengen von 0,2 bis 8,0 Gew.-%, bezogen auf Gesamtmonomere, eingesetzt werden. Ebenfalls können übliche Regler in Mengen von 0,1 bis 5 Gew.-%, bezogen auf Gesamtmonomere, bei der Polymerisation eingesetzt werden.

Wird in Lösung polymerisiert, so können inerte Lösungsmittel, wie z. B. Ethanol, Propanol, Isopropanol, n- oder iso-Butanol, Methylethylketon, Toluol, Xylol, Essigsäurebutylester, Butylglykol usw. verwendet werden.

Falls gewünscht, können zusätzlich zu den Lösungsmitteln auch Lactame mitverwendet werden, deren Mengen, bezogen auf Copolymerisat, 30 Gew.-% nicht überschreiten sollen.

Da die eingesetzten Lactame gesättigt sind, reagieren sie mit den Monomeren nicht unter Copolymerisation, sondern setzen sich über ihre reaktive NH-Gruppe mit einem Vernetzungsmittel um. Die eingesetzten Lactame sind im wesentlichen nicht flüchtig und verbleiben daher beim Härten im Film.

Die Copolymerisate können im Anschluß an ihre Herstellung bei Temperaturen von 140-200 °C von flüchtigen Bestandteilen befreit werden. Dies kann z. B. entweder unter Normaldruck in Schlangenrohrverdampfern durch Einblasen eines Intergases wie Stickstoff oder Wasserdampf in Mengen von 0,1-1 $m^3$ auf 1 kg Harzschmelze oder im Vakuum in Ausdampfapparaturen wie Fallfilmverdampfern, Dünnschichtverdampfern, Schneckenverdampfern, Entspannungsverdampfern oder Sprühverdampfern erfolgen.

Die mittleren Molekulargewichte und die molekularen Uneinheitlichkeiten der Copoylmerisatharze wurden mit Hilfe der Gelpermeationschromatographie (GPC) an Styragelen mit Tetrahydrofuran als Elutionsmittel bestimmt. Dabei werden nach Erstellung einer universellen Eichbeziehung (nach Z. Grubisic, P. Rempp und H. Benoit, J. Polymer Sci. Part B, Polymer Letters 5 (1967) 745) aus der Verteilung der Chromatogramme die Molekulargewichtsmittelwerte $\overline{M}_w$ und $\overline{M}_n$ bestimmt. Die Polymerisate besitzen mittlere Molekulargewichte von $\overline{M}_n$ = 2 000-50 000, vorzugsweise $\overline{M}_n$ = 2 000-15 000, und molekulare Uneinheitlichkeiten U (U = $\overline{M}_w/\overline{M}_n - 1$ : $\overline{M}_w$ = Gewichtsmittel, $\overline{M}_n$ = Zahlenmittel des Molekulargewichts von 0,5 bis 200.

Nach der Herstellung der Copolymerisate können diese mit Lactamen abgemischt werden. Wurde in einem Lactam polymerisiert, so entfällt das Abmischen mit Lactam bzw. kann Lactam ergänzt werden.

Enthält das Copolymerisat eingebaute Gycidylgruppen, so kann es durch Umsetzung mit Fettsäuren modifiziert werden, wobei im Falle von ungesättigten Fettsäuren lufttrocknende Bindemittel erhalten werden können.

Im Anschluß an die Herstellung des Copolymerisats werden die im Copolymerisat enthaltenen Carboxylgruppen teiweise oder vollständig neutralisiert. Die Neutralisation kann in An- oder Abwesenheit des Lactams und gegebenenfalls weiterer konventioneller Lösungsmittel und in An- oder Abwesenheit des Aminoplastharzes erfolgen. Der Neutralisationsgrad liegt bevorzugt bei 30-100 %, d.h. von 1 Grammäquivalent Carboxylgruppen werden 0,3-1 Grammmäquivalente neutralisiert. Dies ergibt einen pH-Wert des wäßrigen Überzugmittels zwischen 5 und 10. Vorzugsweise liegt der pH-Wert des wäßrigen Überzugmittels bei 7-9.

Als Neutralisationsmittel können Ammoniak, Mono- und Polyamine eingesetzt werden. Namentlich seien beispielsweise gennant :

Ammoniak, Ethylamin, Diethylamin, Triethylamin, Trimethylamin, Mono-, Di- oder Triethanolamin, Dimethylethanolamin, vorzugsweise Dimethylethanolamin.

Die erfindungsgemäßen Bindemittel aus dem Copolymerisat mit teilweise oder vollständig neutralisierten Carboxylgruppen und Aminoplast sind mit Wasser verdünnbar, was gegebenenfalls in Gegenwart von organischen Lösungsmitteln erfolgen kann.

Geeignete organische Lösungsmittel sind beispielsweise Alkohole mit 1-4 C-Atomen wie Methanol, Ethanol, n- und iso-Propanol, Butanole ; Essigsäureester mit 2-4 C-Atomen in der Alkoholkomponente, wie Essigsäureethyl- und -butylester oder Ethylglykolacetat, Ethylenglykol-Monoalkyether mit 1-4 C-Atomen im Alkylrest wie Ethylenglykolmonomethyl-, -ethyl- und -butylether ; aliphatische und alicyclische Ketone wie Methylethylketon, Methylisobutylketon, Cyclohexanon, Aceton ; niedere Ether, wie Tetrahydrofuran oder Gemische der genannten Lösungsmittel.

Die aus den erfindungsgemäßen Bindemitteln nach Verdünnung mit Wasser, gegebenenfalls in Gegenwart organischer Lösungsmittel erhaltenen wäßrigen Einbrennlacke können Weißpigmente, insbesondere Titandioxid, in Mengen von 10-100 Gew.-%, bezogen auf Bindemittel, enthalten. Darüber hinaus können noch anorganische oder organische Buntpigmente in Mengen von bis zu 5 Gew.-% sowie Füllstoffe in Mengen von ebenfalls bis zu 5 Gew.-%, Verlaufsmittel bis zu 10 Gew.-%, Wachse zur Erhöhung der Kratzfestigkeit bis zu 10 Gew.-% und übliche Härtungskatalysatoren bis zu 1 Gew.-%, jeweils bezogen auf Bindemittel, im wäßrigen Einbrennlack enthalten sein.

Die in dieser Weise hergestellten Überzugsmittel können unter Verwendung der üblichen Verfahren aufgetragen werden, z. B. durch Umkehrwalzenbeschichter, Sprühen, Streichen und Tauchen oder ähnliche übliche Arbeitsweisen.

Als zu überziehende bzw. zu beschichtende Substrate kommen Metalle, Glas, Kunststoffe, keramische Materialen, insbesondere Metalle in Frage.

Die Härtung erfolgt im allgemeinen bei Temperaturen von 80 °C-250 °C. Es ist manchmal vorteilhaft, die Härtung zunächst bei Temperaturen unter 120 °C zu beginnen und bei Temperaturen über 120 °C zu vervollständigen.

Die mit den erfindungsgemäßen Bindemitteln hergestellten Überzugsmittel ergeben nach ihrer

Härtung Überzüge mit guten anwendungstechnischen Daten und von guter Chemikalien- und Witterungsbeständigkeit. Insbesondere können Haushaltsgeräte mit metallischen Oberflächen wie Spülmaschinen, Waschmaschinen und Kühlschränke mit den aus den erfindungsgemäßen Bindemitteln erhaltenen wäßrigen Einbrennlacken lackiert werden, da die Überzüge eine besonders hohe Waschlaugenbeständigkeit und Lösungsmittelbeständigkeit, einen hohen Glanz und ausgezeichnete Oberflächenhärte aufweisen.

Die in den Beispielen angegebenen Teile und Prozentzahlen beziehen sich auf das Gewicht, sofern nicht anders vermerkt.

## Beispiel 1

In einem mit Rückflußkühler, Heiz-, Kühl- und Dosiervorrichtung versehenen Glasgefäß werden 1 029 g Ethylglykol vorgelegt und auf 110 °C erhitzt. Im Verlauf von 3 h wurde bei 110 °C eine Mischung aus 180 g des Additionsproduktes aus Allylglycidylether mit α-Ethylhexansäure, 353,4 g Butylacrylat, 804,6 g Styrol, 103,5 g Acrylsäure, 282,9 g N-Methoxymethylacrylsäureamid und 9,6 g Mercaptoethanol zudosiert. Gleichzeitig wurde innerhalb eines Zeitraumes von 4 h eine Mischung aus 66,0 g tert.-Butylperoctoat und 171,0 g Ethylglykol zugetropft. Anschließend wird 2 h bei 110 °C nachgerührt. Nach dem Abdrücken über ein Filter resultiert ein Harz mit einer Säurezahl von 26, gemessen in der Lösung, einer Viskosität von 2 634 mPa.s. und einem Festgehalt von ca. 53,5 Gew.-%.

Das Copolymerisat selbst besteht aus copolymerisierten Einheiten von 10,44 % des Additionsproduktes aus Allylglycidylether mit α-Ethylhexansäure, 20,5 % Butylacrylat, 46,66 % Styrol, 6,00 % Acrylsäure und 16,40 % N-Methoxymethylacrylsäureamid.

Es besitzt ein mittleres Molgewicht $\overline{M}_n$ von 5 210 und eine molekulare Uneinheitlichkeit U von 1,47.

## Vergleichsversuch

(ohne Umsetzungsprodukt aus Allylglycidylether + α-Ethylhexansäure)

In einem mit Rückflußkühler, Heiz-, Kühl- und Dosiervorrichtung versehenen Glasgefäß wurden 1 029 g Ethylglykol vorgelegt und auf 110 °C erhitzt. Im Verlauf von 3 h wurde bei 110 °C eine Mischung aus 180,0 g 2-Hydroxypropylmethacrylat, 353,4 g n-Butylacrylat, 804,6 g Styrol, 103,5 g Acrylsäure, 282,9 g N-Methoxymethylacrylsäureamid mit 9,6 g Mercaptoethanol zudosiert. Gleichzeitig wurde innerhalb eines Zeitraumes von 4 h eine Mischung aus 66 g tert.-Butylperoctoat und 171 g Ethylglykol zugetropft. Anschließend wird 2 h bei 110 °C nachgerührt. Nach dem Abdrücken über ein Filter wird ein viskoses Harz erhalten, das einen Festgehalt von ca. 53,5 Gew.-% besitzt.

Der Festgehalt wurde — wie auch in den nachfolgenden Beispielen — bestimmt, indem 1 g Harzlösung auf einem Metalldeckelchen von 7,5 mm Durchmesser in einer Schichtdicke von ca. 50 µm 1 h im Umlufttrockenschrank auf 80 °C erhitzt wurde.

Das Copolymerisat selbst besteht aus copolymerisierten Einheiten von 10,44 % 2-Hydroxypropylmethacrylat, 20,5 % Butylacrylat, 46,66 % Stryrol, 6,00 % Acrylsäure und 16,40 % N-Methoxymethylacrylsäureamid.

Es besitzt ein mittleres Molgewicht $\overline{M}_n$ von 4 890 und eine molekulare Uneinheitlichkeit U von 1,83.

## Beispiel 2

Es wurde mit Ausnahme des Monomerengemisches wie in Beispiel 1 beschrieben verfahren. Die Monomerenmischung des Beispiels 2 setzt sich wie folgt zusammen : 180 g des Additionsproduktes aus Allylglycidylether mit Isononansäure, 353,4 g Butylacrylat, 804,6 g Styrol, 103,4 g Acrylsäure, 282,9 N-Methoxymethylacrylsäureamid und 9,6 g Mercaptoethanol.

Es resultiert ein Harz mit einer Säurezahl von 27, gemessen in Lösung, einer Viskosität von 1 897 mPa.s und einem Festgehalt von ca. 54,0 Gew.-%. Das Copolymerisat selbst besteht aus copolymerisierten Einheiten von 10,44 % des Additionsproduktes Allylglycidylether mit Isononansäure, 20,5 % N-Butylacrylat, 46,66 % Styrol, 6,00 % Acrylsäure und 16,40 % N-Methoxymethylacrylsäureamid.

Es besitzt ein mittleres Molekulargewicht $\overline{M}_n$ von 3 570 und eine molekulare Uneinheitlichkeit U von 2,04.

## Beispiel 3

Es wurde mit Ausnahme der Monomerenmischung wie in Beispiel 1 beschrieben verfahren. Als Monomerengemisch kam folgende Zusammensetzung zum Einsatz : 180 g des Additionsproduktes aus Allylglycidylether mit α-Ethylhexansäure, 353,4 g Butylacrylat, 804,6 g Styrol, 103,5 g Acrylsäure, 282,9 g N-Methoxymethacrylsäureamid und 9,6 g Mercaptoethanol. Es resultiert ein Harz mit einer Säurezahl von 25, gemessen in Lösung, einer Viskosität von 3 495 mPa.s und einem Festgehalt von ca. 54 Gew.-%.

Das Copolymerisat selbst besteht aus copolymerisierten Einheiten von 10,44 % des Additionspro-

duktes Allylglycidylether mit α-Ethyhexansäure, 20,5 % Butylacrylat, 46,66 % Styrol, 6,00 % Acrylsäure und 16,40 % N-Methoxymethylmethacrylsäureamid.

Es besitzt ein mittleres Molekulargewicht $\overline{M}_n$ von 6 305 und eine molekulare Uneinheitlichkeit U von 2,37.

Herstellen eines Weißlackes und eines daraus hergestellten Lackfilms.

100 Tl. der vorstehend beschriebenen Harze (Beispiele 1-3 und Vergleich 1) werden mit 4,34 Tl. Dimethylethanolamin neutralisiert, und aus je 7,84 Tl. der neutralisierten Harze werden unter Zusatz von 27,12 Tl. Titandioxid vom Rutiltyp und 15,46 Tl. Wasser die Mahlgutformulierungen für die Perlmühlenanreibung hergestellt.

Die Auflackung der hergestellten Mahlgutformulierungen erfolgt nun in der Weise, daß einmal ohne und einmal mit dem Reaktivverdünner ε-Caprolactam gearbeitet wird. Dadurch ergeben sich zwei Prüfrezepturen, im folgenden a. und b. genannt.

| | a. in Teilen | b. in Teilen |
|---|---|---|
| Mahlgut mit den neutralisierten Harzen der Beispiele 1 - 3 bzw. Vergleich 1) | 50,42 | 50,42 |
| Harz aus Beispielen 1 - 3 bzw. aus Vergleich 1 | 34,52 | 26,05 |
| ε-Caprolactam | - | 4,53 |
| Hexamethoxymethylmelamin | 4,54 | 4,54 |
| p-Toluolsulfonsäure, 10 %ig in IPA[1)] | 0,54 | 0,54 |
| handelsübliches Verlaufsmittel | 0,30 | 0,30 |
| Wasser | 9,68 | 13,62 |
| | 100,00 | 100,00 |
| Einstellen auf Spritzviskosität = 51 s im 4-mm-Becher (DIN 53 211) mit Butylglykol/Wasser 1:1 | 28,5 | 18,7 |

1) IPA = Isopropylalkohol

Die aus den Mahlgutformulierungen mit den neutralisierten Copolymerisatharzen der Beispiele 1-3 und des Vergleichs 1 und den nicht neutralisierten Copolymerisaten der Beispiele 1-3 und des Vergleichs 1 ohne ε-Caprolactamzusatz werden als Weißlacke 1a, 2a, 3a und Vergleich 1a und die gleichen Weißlacke mit ε-Caprolactamzusatz als Weißlacke 1b, 2b, 3b und Vergleich 1b bezeichnet.

Der jeweils erhaltene Weißlack wurde auf zinkphosphatierte Stahlbleche durch Spritzen appliziert (Trockenfilm-Schichtdicke ca. 25-30 µm) und 10 min bei 180 °C im Umlufttrockenschrank eingebrannt.

Test der Waschlaugenbeständigkeit.

Die lackierten Prüfbleche (Dicke der Filme 30 µm, eingebrannt 10 min bei 180 °C) wurden über einen Zeitraum von 4 h bei 95 °C in eine 0,2 %ige wäßrige Lösung eines handelsüblichen Waschmittels auf Basis von Pentanatriumtripolyphosphat, Natriummetasilikat, Soda, oxyethyliertem Nonylphenol (10 Ethylenoxideinheiten/Mol Phenol) und Cyanursäurechlorid gegeben.

Nach dem Abspülen mit kaltem Wasser werden diese Bleche nochmals über 4 h einer 0,3 %igen Lösung des oben angegebenen Waschmittels bei 95 °C ausgesetzt. Waschlaugenbeständigkeit wird attestiert, wenn dieser Testzyklus (insgesamt 480 min) zweimal ohne Blasenbildung oder Mattwerden der Lackfilme durchlaufen wird.

Tabelle

Kennzahlen und Prüfergebnisse

| Weißlack | 1a | 2a | 3a | Vergleich 1a |
|---|---|---|---|---|
| A. Kennzahlen | | | | |
| Säurezahl des Copolymerisats | 26 | 27 | 25 | 26 |
| Festgehalt (%) | 53,5 | 54 | 54 | 53,5 |
| Viskosität des Bindemittels, 40 %ig in Ethylglykol nach DIN 53 211 (sec) | 36 | 32 | 45 | 39 |
| B. Prüfergebnisse | | | | |
| Glanz nach Gardner 20°-Winkel (ASTM 523) | 50 | 54 | 48 | 43 |
| Waschlaugenbeständigkeitstest (Min.) nach 3 Wochen Lagerung bei RT. | (best.)* | (best.) | (best.) | (nicht best.) |

*) (best) = bestanden

| Weißlack | 1b | 2b | 3b | Vergleich 1b |
|---|---|---|---|---|
| A. Kennzahlen | | | | |
| Säurezahl des Copolymerisats | 26 | 27 | 25 | 26 |
| Festgehalt (%) | 53,5 | 54 | 54 | 53,5 |
| Viskosität des Bindemittels, 40 %ig in Ethylenglykol nach DIN 53211 (sec) | 36 | 32 | 45 | 39 |
| B. Prüfergebnisse | | | | |
| Glanz nach Gardner 20°-Winkel (ASTM 523) | 60 | 62 | 53 | 49 |
| Waschlaugenbeständigkeitstest (Min.) nach 3 Wochen Lagerung bei RT. | (best.) | (best.) | (best.) | (nicht best.) |

**Anspruch**

Wasserverdünnbare Lackbindemittel aus einer Mischung aus

A. 50-94 Gew.-%, eines Copolymerisats, bestehend aus copolymerisierten Einheiten von

a. 30-65 Gew.-% eines Vinyl- oder Isopropenylaromaten mit 8-14 C-Atomen oder eines Methacrylsäurealkylesters mit 1-4 C-Atomen in der Alkoholkomponente oder deren Mischungen ;

b. 10-30 Gew.-% mindestens eines Acrylsäurealkylesters mit 1-8 C-Atomen in der Alkoholkomponente ;

c. 1-20 Gew.-% Maleinsäure, Fumarsäure, Itaconsäure oder dern Halbester mit 1-8 C-Atomen in der Alkoholkomponente, (Meth)Acrylsäure oder Mischungen der genannten Monomeren ;

d. 0-20 Gew.-% mindestens eines Hydroxyalkylesters der (Meth)Acrylsäure mit 2-4 C-Atomen in der Alkylgruppe oder Glycidyl (meth)acrylat oder Mischungen der vorgennanten Monomeren ;

e. 10-30 Gew.-% N-Methylol(meth)acrylsäureamid oder N-Methoxymethyl(meth)acrylsäureamid, und

f. 2-40 Gew.-% eines Umsetzungsproduktes aus Allylglycidylether und aliphatischen cycloaliphatischen, araliphatischen oder aromatischen Monocarbonsäuren mit 2-30 C-Atomen oder deren Mischungen, sowie

B. 6-50 Gew.-%, eines Aminoplastharzes und

C. 0-30 Gew.-%, bezogen auf Copolymerisat, eines Lactams,

wobei 30-100 % der Anzal der Carboxylgruppen der in das Copolymerisat eingebauten Komponente A.c durch Ammoniak, Mono- oder Polyamine neutralisiert sind.

**Claim**

Water-dilutable lacquer binders comprising a mixture of

A. 50-94 % by weight of a copolymer consisting of copolymerised units of

a. 30-65 % by weight of an aromatic vinyl or isopropenyl compound with 8-14 C atoms or of a methacrylic acid alkyl ester with 1-4 C atoms in the alcohol component or mixtures therof ;

b. 10-30 % by weight of at least one acrylic acid alkyl ester with 1-8 C atoms in the alcohol component ;

c. 1-20 % by weight of maleic acid, fumaric acid, itaconic acid or semiesters thereof with 1-8 C atoms in the alcohol component, (meth)acrylic acid or mixtures of the stated monomers ;

d. 0-20 % by weight of at least one hydroxyalkyl ester of (meth)acrylic acid with 2-4 C atoms in the alkyl group or glycidyl(meth)acrylate or mixtures of the aforementioned monomers ;

e. 10-30 % by weight of N-methylol(meth)acrylic acid amide or N-methoxymethyl(meth)acrylic acid amide, and

f. 2-40 % by weight of a reaction product of an allyl glycidyl ether and aliphatic, cycloaliphatic, araliphatic or aromatic monocarboxylic acids with 2-30 C atoms or mixtures therof, and

B. 6-50 % by weight of an aminoplast resin and

C. 0-30 % by weight, based on the copolymer, of a lactam,

30-100 % of the number of carboxyl groups of component A.c incorporated into the copolymer being neutralised by ammonia or mono- or poly-amines.

**Revendication**

Liants diluables à l'eau pour laques et vernis, consistant en un mélange de

A. 50-94 % en poids d'un copolymère consistant en motifs copolymérisés de

a. 30-65 % en poids d'un carbure vinyl- ou isopropénylaromatique en $C_8$-$C_{14}$ ou d'un méthacrylate d'alkyle ayant un composant alcool en $C_1$-$C_4$ ou leurs mélanges ;

b. 10-30 % en poids d'au moins un acrylate d'alkyle ayant un composant alcool en $C_1$-$C_8$ ;

c. 1-20 % en poids d'acide maléique, d'acide furamique, d'acide itaconique ou de leurs semi-esters ayant un composant alcool en $C_1$-$C_8$, d'acide (méth)-acrylique ou de mélanges des monomères mentionnés ;

d. 0-20 % en poids d'au moins un (méth)acrylate d'hydroxyalkyle ayant un groupe alkyle en $C_2$-$C_4$ ou de (méth)acrylate de glycidyle ou de mélanges des monomères précités ;

e. 10-30 % en poids de N-méthylol(méth)acrylamide ou de N-méthoxyméthyl(méth)acrylamide et

f. 2-40 % en poids d'un produit de réaction d'alkylglycidyléther et d'acides monocarboxyliques aliphatiques, cycloaliphatiques, arylaliphatiques ou aromatiques en $C_2$-$C_{30}$ ou leurs mélanges ; ainsi que

B. 6-50 % en poids d'une résine aminoplaste ; et

C. 0-30 % en poids d'un lactame, par rapport au copolymère,

30-100 % du nombre des groupes carboxyles du composant A.c incorporé dans le copolymère étant neutralisés par l'ammoniac ou des mono- ou polyamines.